# EUROPEAN PATENT APPLICATION

(11) **EP 4 779 459 A1**
(43) Date of publication of application: **22.07.2026**
(21) Application number: 25205523.1
(22) Date of filing: 30.09.2025
(51) Int. Cl.: G06F 7/544, G06F 7/58

(54) **METHOD AND SYSTEM FOR DETERMINING A SCENARIO OUTPUT ITEM VALUE**

(30) Priority: 17.01.2025 EP 25152579
(71) Applicant: ScenarioX SA, 1204 Genève (CH)
(72) Inventor: EXPOSITO, Ivan Diego, 1216 Cointrin (CH); KUASSIVI, Ahlin Situ Cédric, 1213 Petit Lancy (CH); XAVIER, Lionel, S398084 Singapour (SG); YOMI KWANDJEU, Achille, 1255 Veyrier (CH)
(74) Representative: Hautier IP

(57) **Abstract**

The invention provides a method (100) for scenario analysis using quantum random numbers. It involves defining a system, generating quantum random numbers via a quantum process and measurement, simulating the system's evolution, and extracting scenario output items. The method concatenates multiple simulations into a global simulation when analyzing complex systems. This approach leverages quantum mechanics to enhance the accuracy and reliability of scenario projections across various applications, including financial modeling and epidemiological studies.

## Description

### INTRODUCTION

The present invention relates to the technical field of computing simulations of scenarios, in particular using quantum random number generation processes.

### BACKGROUND

Scenario simulation is an important tool across diverse fields, enabling predictive modeling and informed decision-making. Prior art solutions often rely on deterministic models which, while providing insights, suffer from limitations. Deterministic models, by their nature, assume fixed parameters and relationships, failing to capture the inherent stochasticity and complexity of real-world systems. Additionally, existing methods often require significant computational resources and may not accurately represent the range of possible outcomes, especially when initial and final states, along with statistical moments, are known.

Traditional simulation techniques frequently struggle to incorporate prior knowledge or constraints effectively. Many approaches treat all simulations equally, regardless of their relevance to specific target values or predetermined future states. This indiscriminate evaluation leads to a large number of irrelevant simulations being processed, increasing computational burden and obscuring valuable insights. Furthermore, existing methods often lack a robust mechanism for identifying and prioritizing simulations that closely match desired outcomes, particularly when considering a range of statistical moments characterizing the system's behavior. The absence of a targeted selection process results in a diluted dataset and reduced predictive accuracy.

In light of these disadvantages, it is, therefore, an objective of the present invention to partially overcome the aforementioned challenges by proposing a novel approach that addresses the inefficiencies and impracticalities associated with the prior art solutions.

### SUMMARY

The present invention has been designed to overcome at least some drawbacks present in prior art solutions.According to an aspect, the present invention relates to a computer-implemented method for determining at least one scenario output item value regarding the evolution of a predetermined system, the method being configured to be executed by at least one computing system, the method comprising:
- A scenario design phase configured to compute the initial state of a system, the scenario design phase comprising:
   ∘ Selecting a system to evaluate by a first user using a communication module;
   ∘ Receiving, by the communication module, input items, the input items being configured to define a set of trends regarding the selected system;
   ∘ Selecting at least one output item by a second user using a communication module; and
   ∘ Determining, using at least one classical information processing module, the relationship between the input items and the output items using a predetermined process;
- A simulation phase of the evolution of the generated scenario comprising generating a set of N simulations according to the output items using the determined relationship, this generation step comprising:
   ∘ Setting, using the classical information processing module, initial conditions of the system according to the input items;
   ∘ Acquiring at least one set of quantum-generated random numbers, using a communication module, by at least:
      ▪ Generating, using the classical information processing module and at least one quantum random number generation module, a plurality of quantum-generated random numbers, by at least:
         - Initiating at least one quantum process using the classical information processing module and the quantum random number generation module, said quantum random number generation module comprising at least one output configured to provide a stream of random data generated by the quantum process;
         - Measuring at least one stream of random data from said output of this quantum random number generation module using a measurement module;
         - Post-processing, using the classical information processing module, the stream of random data to convert the stream of random data into plurality of quantum-generated random numbers;
         - Storing the quantum-generated random numbers in at least one storing module;
      ▪ Selecting, using the processing module, the set of quantum-generated random numbers;
   ∘ Simulating, using the processing module and the set of quantum-generated random numbers, the time evolution of the initial state of the system to obtain at least one plurality of final states of the system, the simulating step comprising at least:
      ▪ Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
      ▪ For each subset of the predetermined number of subsets of quantum-generated random numbers, creating at least one trajectory of the evolution of the state of the system from its initial state to at least one final state over a given timeframe;
   ∘ Obtaining, using the classical information processing module, a distribution of a plurality of final states according to at least one first axis by organizing the plurality of final states based on predetermined rules, said distribution defining a global manifold of n dimensions, n being equal or greater than 1;
   ∘ Determining, using the classical information processing module, at least one threshold value among the plurality of final states, said threshold value delimiting a first set of final states from a second set of final states, the determining step comprising:
      ▪ Setting a given criterion;
      ▪ Calculating a first manifold of n+1 dimension based on said given criterion under the manifold of n dimension, said first manifold corresponding to said first set of final states, said first manifold being a part of a global manifold of n+1 dimensions;
      ▪ Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
      ▪ Computing the at least one threshold value on at least the first axis, this threshold value corresponding to at least one intersection of the first axis with the another manifold of n dimensions;
- A selection phase , using the classical information processing unit, of a set of N generated simulations a set of simulations, the simulations of the set of simulations comprising the set of trends defined by the input items;
- A determination phase, using the classical information processing unit, of at least one scenario output item value regarding the system, the determination phase comprising:
   ∘ If N is equal to 1, extracting the scenario output item value from the selected generated simulation;
   ∘ If N is greater than 1:
      ▪ concatenating the N selected generated simulations into one global generated simulation, and
      ▪ Extracting the scenario output item value from the global generated simulation.

According to another aspect, the present invention relates to a computing system for determining at least one scenario output item regarding the evolution of a predetermined system, the computing system being configured to execute the method according to the present invention.

According to another aspect, the present invention relates to a computing system for determining at least one scenario output item regarding the evolution of a predetermined system, the computing system being configured to execute the method according to the present invention, the computing system comprising:
➢ A communication module configured to:
   - Receive a selection of a system to evaluate from a first user;
   - Receive input items defining a set of trends regarding the selected system to evaluate; and
   - Receive a selection of at least one output item from a second user.
➢ A classical information processing module configured to:
   - Determine the relationship between the input items and the output items using a predetermined process;
   - Set initial conditions of the system to evaluate according to the input items;
   - Post-process streams of random data into a plurality of quantum-generated random numbers;
   - Select a set of quantum-generated random numbers;
   - Partition the selected set of quantum-generated random numbers into a first predetermined number of subsets, each subset comprising a second predetermined number of quantum-generated random numbers, wherein the first predetermined number is based on a first criterion related to parameters of a simulation step and the second predetermined number is based on a second criterion related to the nature of the system to evaluate;
   - Simulate the time evolution of the initial state of the system to evaluate using the set of quantum-generated random numbers to obtain a plurality of final states of the system to evaluate, wherein simulating comprises creating at least one trajectory for each subset of quantum-generated random numbers representing the evolution of the state of the system to evaluate from its initial state to at least one final state over a given timeframe;
   - Obtain a distribution of the plurality of final states according to at least one first axis by organizing the plurality of final states based on predetermined rules, said distribution defining a global manifold of n dimensions, n being equal or greater than 1;
   - Determine at least one threshold value among the plurality of final states, wherein determining comprises: setting a given criterion, calculating a first manifold of n+1 dimension based on said given criterion under the manifold of n dimension, defining another manifold of n dimension configured to separate the first manifold of n+1 dimension from a second manifold of n+1 dimensions, and computing the at least one threshold value on at least the first axis corresponding to at least one intersection of the first axis with the another manifold of n dimensions;
   - Select a set of N generated simulations from the plurality of final states, wherein the selected simulations comprise the set of trends defined by the input items; and
   - Determine at least one scenario output item regarding the system to evaluate based on the selected simulations, wherein if N is equal to 1, the scenario output item is extracted from the selected simulation, and if N is greater than 1, the N selected generated simulations are concatenated into a global generated simulation from which the scenario output item is extracted.
➢ A quantum random number generation module coupled with the classical information processing module and configured to:
   - Initiate at least one quantum process; and
   - Provide a stream of random data generated by the quantum process.
➢ A measurement module coupled with the quantum random number generation module and configured to measure at least one stream of random data from said output of this quantum random number generation module.
➢ A storing module coupled with the classical information processing module and configured to store the quantum-generated random numbers.

According to another aspect, the present invention relates to a computer product program for determining at least one scenario output item regarding the evolution of a predetermined system which, when executed by at least one computing system according to the present invention, executes the method according to the present invention.

According to another aspect, the present invention relates to a non-transitory computer readable medium comprising at least one computer program product according to the present invention.

### BRIEF DESCRIPTION OF THE DRAWINGS

For a better understanding of the present invention, as well as other aspects and further features thereof, reference is made to the following description which is to be used in conjunction with the accompanying drawings, where:
FIG. 1 illustrates a high-level flowchart of a method 100 according to an embodiment of the present invention.
FIG. 2 illustrates a flowchart of a method 100 according to an embodiment of the present invention;
FIG. 3 illustrates a schematic representation of a specific embodiment of the presented invention;
FIG. 4 illustrates a distribution of final states according to an embodiment of the present invention;

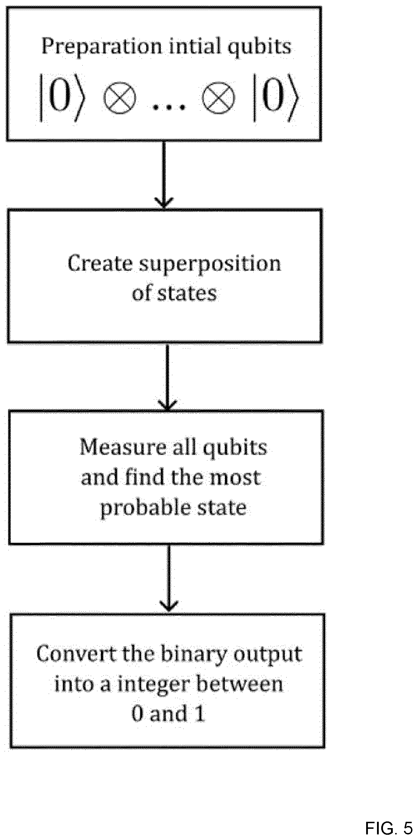

FIG. 5 illustrates the step-by-step process of a Quantum Random Number Generator according to an embodiment of the present invention.

### DETAILED DESCRIPTION

Before providing below a detailed review of embodiments of the invention, some optional characteristics that may be used in association or alternatively will be listed hereinafter:
According to an example, the system under evaluation is selected from the group consisting of: financial markets, environmental systems, energy consumption networks, epidemiological models, manufacturing processes, and portfolio management systems
According to an example, the first user is taken among at least: a human, a robot, an artificial intelligence, an artificial intelligence agent.

According to an example, the second user is taken among at least: a human, a robot, an artificial intelligence, an artificial intelligence agent.

**According** to an example, the second user is identifcal to the first user taken among at least: a human, a robot, an artificial intelligence, an artificial intelligence agent.

According to an example, input items comprise a list of parameters, each parameter comprising data taken among at least one of the following data: historical data and synthetic data.

According to an example, the synthetic data are generated based on at least one predetermined initial condition associated with at least one independent variable.

According to an example, the generation of the synthetic data comprises simulating the synthetic data.

According to an example, the step of simulating the synthetic data comprises at least:
- Selecting an anchoring date
- Selecting a time frame for the synthetic data, the selected time frame comprising a plurality of moments;
- Obtaining the historical data of the at least one independent variable at the anchoring date
- Obtaining the values of at least one parameter of the independent variable over the selected time frame;
- Selecting a target value of the parameter for the last moment of the selected time frame;
- Generating M simulations by simulating M times a plurality of sub-time frames over the entire selected time frame, using a geometric Brownian motion based on the values of the parameter and at least one stochastic term;
- Selecting among the M simulations, a set of K generated simulations wherein the value of the parameter at the end of the time frame minus the target value is lower than a predetermined threshold:
- Obtaining the synthetic data by:
   ∘ If K is equal to 1, extracting the synthetic data from the selected simulation;
   ∘ If K is greater than 1 :
      ▪ Calculating the mathematical average of the M simulations; and
      ▪ Extracting the synthetic data from the mathematical average of the M simulations.

According to an example, the output item comprises historical data, preferably in the form of at least one time series.

According to an example, the present invention comprises, when the historical data of the output item is empty:
- a step of identifying a set of J sub-output items, each sub-output item being associated with at least one dependent variable comprising historical data and being related to the output item.
- If J is equal to 1, then:
   ∘ Setting at least one rolling window period for computing at least one adjusted beta;
   ∘ Retrieving historical data of the dependent variable at the anchoring date, the historical data comprising a plurality of time series;
   ∘ Assembling the historical data, preferably the plurality of time series, of the dependent variable;
   ∘ Retrieving historical and/or scenario data of the independent variable;
   ∘Computing, based on a predetermined time window:
      ▪ A first difference of value between the value of the independent variable before and after the time window; and
      ▪ A second difference of value between the value of the dependent variable before and after the time window;
   ∘ Obtaining a mathematical equation of a curve by performing a linear regression of the second difference of values on the first difference of value, for each rolling window over the historical data;
   ∘ Extracting at least one slope of the curve using the mathematical equation, the at least one slope corresponding to the raw beta;
   ∘ Adjusting the raw beta using the following equation : Adjusted Beta = A * (Raw Beta) + B
   o For each first difference of value along the historical data:
      ▪ defining an interval around that value and
      ▪ filtering the historical data to collect corresponding second difference value and raw beta.
   ∘ Computing a new beta, preferably using at least one among a statistics mean, median, or quantiles of filtered betas;
   ∘ Estimating the log of the second difference of values by multiplying this new beta by the first difference of value (alternatively, use the statistics mean, median, or quantiles dependent return directly).
   ∘ Converting the estimated log into a predetermined multiplicative factor via an exponential function,
   ∘ Updating the dependent variable's value by multiplying its prior value by the predetermined multiplicative factor.
- If J is greater than 1, then:
   ∘ For each sub-output:
      - Selecting at least one independent variable;

      ▪ For each independent variable:
         - obtaining historical data;
         - Concatenating the historical data and input items to have a unique time series per independent variable
      ∘ Computing the Principal Component Analysis (PCA) of the independent variables:
         ▪ Putting all the time series into a matrix
         ▪ Calculating the co-variance of the matrix
         ▪ Decomposing the co-variance matrix into its proper vectors
         ▪ Selecting the proper vector associated with the highest proper value, the proper vector corresponding to a unique time series comprising a linear combination of the time series.

According to an example, the present invention further comprises, after the step of selecting at least one output item, a step of selecting at least one target value representing a predetermined future value of at least one of the output items.

According to an example, the selection phase comprises:
- Filtering the simulation to keep only the simulations matching the targets with a predetermined tolerance value at each specified moment; Or
- If no simulation matches the targets with the predetermined tolerance value at each specified moment, measuring a mathematical distance of each simulation to the target profile (e.g. via Euclidean norm) and picking the simulation having the minimal distance.

According to an example, the concatenation step comprises at least one among:
- Calculating a mathematical statistical value (mean, median, and quantiles at each time step) of the N selected generated simulations to generate the global generated simulation; or
- Selecting one generated simulation among the N selected generated simulations according to a predetermined set of rules.

According to an example, the predetermined set of rules comprises at least one among:
- Selecting the simulation corresponding to the most positive scenario regarding a set of requirements;
- Selecting the simulation corresponding to the most negative scenario regarding a set of requirements;
- Selecting the simulation corresponding to the set of trends according to a predetermined narrative;
- Selecting a simulation according to a predetermined risk level.

According to an example, n is equal to 1, and the distribution of the plurality of final states defines a curve and the first manifold defines a surface under said curve, and the another manifold defines a line.

According to an example, n is equal to 2, and the distribution of the plurality of final states defines a surface and the first manifold defines a volume under said surface, and the another manifold defines a surface.

According to an example, the step of simulating the time evolution of the initial state of the system comprises at least the following sub-steps:
a. Defining at least a plurality of parameters by:
   i. Setting at least an initial value S₀ for at least one quantity being simulated;
   ii. Defining at least one growth rate r, preferably constant, configured to represent the expected tendency of change of the quantity being simulated over time;
   iii. Defining a volatility σ configured to represent the degree of fluctuation in the process;
   iv. Setting a time horizon T for the simulation;
   v. Defining a number N of steps corresponding to the number of time intervals to calculate the simulation at regular intervals;
   vi. Selecting a number M of simulations corresponding to the number of independent paths to simulate;
   This plurality of parameters are configured to mathematically simulate the evolution of the quantity according to the following stochastic differential first equation: dSt = St * (r*dt + *σ* * dWt) where Wt represents random shocks through a Wiener process, and the following second equation: S_{t+Δt} = St * exp((r - 0.5*σ*₂) Δt + σΔt^{1/2}Z) configured to discretize the first equation to simulate changes over predetermined time intervals Δt, and where Z is a standard normal random variable, introducing randomness at each time step using the set of quantum-generated random number;
b. Generating M Random Paths, each random path representing a unique possible outcome of the quantity's evolution, and for each generation of a random path:
   i. Starting from the initial value S0;
   ii. Iterating over N time steps.
   iii. At each step, generating a new random value Z using at least one quantum-generated random number form the set of quantum-generated random numbers,
   iv. Applying the new random value Z to the second equation to calculate an updated value St;
c. Recording the updated value St at each interval until reaching the end of the time horizon T.
d. Calculating average values and/or other statistical measures across all random paths at predetermined points in time over the time horizon T.

According to an example, the present invention comprises:
a. computing the average values and/or other statistical measures across all random paths at predetermined points in time over the time horizon T to generate at least one probability distribution and/or at least one plurality of probabilities, each probability of the plurality of probabilities corresponding to a specific scenario; and
b. aggregating at least a plurality of results across the different random paths to obtain probabilistic data, said probabilistic data comprising at least one among: a mean, a median, a variance, or probability distributions over time.

According to an example, the quantum process comprises a transformation of at least one quantum state through a specific set of operations, and the quantum process is taken among at least:
a. Quantum coin flip process using at least one qubit;
b. Quantum measurement process on an entangled qubit system.

According to an example, the quantum process comprises a transformation of at least one quantum state through a specific set of operations.

According to an example, the quantum process is taken among at least:
a. Quantum coin flip process using at least one qubit;
b. Quantum measurement process on an entangled qubit system.

According to an example, the step of setting initial conditions of the system comprises defining a set of key variables related to an initial state of the system, and attributing at least one value to each variable of the set of key variables.

According to an example, the step of setting initial conditions of the system comprises defining a set of key variables related to an initial state of the system.

According to an example, after defining the set of key variables, the step of setting initial conditions of the system comprises attributing at least one value to each variable of the set of key variables.

According to an example, the quantum random number generation module comprises a plurality of qubits, the plurality of qubits comprising at least one of superconducting qubits or ions trapped qubits, and the step of generating a plurality of quantum-generated random numbers comprises:
a. Putting a set of qubits of the plurality of qubits into a uniform superposition state;
b. Measuring the state of each qubit of the set of qubits using at least one measurement module, the state being measured as a binary value;
c. Post-processing the measurements by converting the binary value into a decimal value using the classical information processing module;
d. Repeating steps a to c until a predetermined number of quantum-generated random numbers is reached.

According to an example, the quantum random number generation module comprises a plurality of qubits.

According to an example, the plurality of qubits comprises at least one of superconducting qubits or ions trapped qubits.

According to an example, the step of generating a plurality of quantum-generated random numbers comprises:
a. Putting a set of qubits of the plurality of qubits into a uniform superposition state;
b. Measuring the state of each qubit of the set of qubits using at least one measurement module, the state being measured as a binary value;
c. Post-processing the measurements by converting the binary value into a decimal value using the classical information processing module;
d. Repeating steps a to c until a predetermined number of quantum-generated random numbers is reached.

According to an example, the step of putting the set of qubits of the plurality of qubits into a uniform superposition state comprises using a set of Hadamard gates.

According to an example, the measurement module comprises at least one pulse emitter and at least one detector.

According to an example, the step of simulating the time evolution of the initial state of the system comprises using at least one of Monte Carlo and/or Geometric Brownian Motion approaches.

According to an example, the present invention further comprises using of a Markov Chain Monte Carlo (MCMC) approach for simulating the time evolution of the initial state of the system.

According to an example, the predetermined rules comprise ordering the final states based on their values.

According to an example, the step of simulating the time evolution of the initial state of the portfolio to obtain a plurality of final states of the portfolio comprises at least the following sub-steps:
a. Defining at least a plurality of parameters by:
b. Setting at least an initial price S0 for at least one asset being simulated;
c. Defining at least one risk free rate r, preferably constant, configured to represent the opportunity cost of holding a risk-free asset ;
d. Defining a volatility σ of the asset configured to represent the degree of price fluctuation;
e. Setting a time horizon T for the simulation;
f. Defining a number N of steps corresponding to the number of time intervals to calculate the simulation at regular intervals;
g. Selecting a number M of simulations corresponding to the number of independent paths to simulate; This plurality of parameters is configured to mathematically simulate the evolution of the price of the asset according to the following stochastic differential first equation: dSt = St * (r*dt + σ * dWt) where Wt represents random shocks through a Wiener process, and the following second equation: S_{t+Δt} = St * exp((r - 0.5*σ*₂) Δt + *σ*Δt^{1/2}Z) configured to discretize the first equation to simulate changes over predetermined time intervals Δt, and where Z is a standard normal random variable, introducing randomness at each time step using the set of quantum-generated random number;
h. Generating M Random Paths, each random path representing a unique possible outcome of the price's evolution, and for each generation of a random path:
   i. Starting from the initial price S₀;
   ii. Iterating over N time steps.
   iii. At each step, generating a new random value Z using at least one quantum-generated random number from the set of quantum-generated random numbers,
   iv. Applying the new random value Z to the second equation to calculate an updated price Sₜ;
   v. Recording the updated price St at each interval until reaching the end of the time horizon T.
   e. Calculating average values and/or other statistical measures across all random paths at predetermined points in time over the time horizon T.

According to an example, the present invention further comprises aggregating at least a plurality of results across the different random paths to obtain probabilistic data, said probabilistic data comprising at least one among: an average final price, a variance, or probabilities of certain price thresholds.

In the context of the present invention, "manifold of n dimensions" may refer to a topological space of n dimensions that is locally Euclidean. More specifically, each point in a manifold has a neighborhood that is homeomorphic to an open set in Euclidean space. This property allows for the use of techniques from Euclidean geometry and calculus when analyzing manifolds. The dimension of a manifold is the number of coordinates required to specify a point within it, which can be any integer greater than or equal to zero.

In the context of the present specification, a "server" is a computer program that is running on appropriate hardware and is capable of receiving requests (e.g., from devices) over a network, and carrying out those requests, or causing those requests to be carried out. The hardware may be one physical computer or one physical computer system, but neither is required to be the case with respect to the present invention. **In** the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first module" and "third module" is not intended to imply any particular order, type, chronology, hierarchy or ranking (for example) of/between the modules, nor is their use (by itself) intended imply that any "second module" must necessarily exist in any given situation. Further, as is discussed herein in other contexts, reference to a "first" element and a "second" element does not preclude the two elements from being the same actual real-world element. Thus, for example, in some instances, a "first" module and a "second" module may be the same software and/or hardware, in other cases they may be different software and/or hardware.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers. It can be said that a database is a logically ordered collection of structured data kept electronically in a computer system

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" or "module" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

The functions of the various elements shown in the figures, including any functional block labeled as a "processor" or a "processing module" or a "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. **In** some embodiments of the present invention, the processor may be a general purpose processor, such as a central processing unit (CPU), also called a classical processing unit, or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities. Implementations of the present invention each have at least one of the above-mentioned object and/or aspects, but do not necessarily have all of them. It should be understood that some aspects of the present invention that have resulted from attempting to attain the above-mentioned object may not satisfy this object and/or may satisfy other objects not specifically recited herein.

In the present description, the words "data", "piece of information" and "information" can be used for the same purpose, i.e. one data can be or comprise information or a piece of information, and a piece of information can be or comprise data.

In the present description, one module can comprise several modules, one module can be formed of several modules. For example, the quantum channel module can comprise several other modules and quantum channels.

According to an embodiment, the present invention can be configured to cooperate with at least one input module including one or more user interface devices such as a keyboard, pointer, number pad, or touch screen.

According to an embodiment, the classical information processing module comprises at least one processor. In the present description, a processor may be any logic processing unit, such as one or more digital processors, microprocessors, central processing units, graphics processing units, application-specific integrated circuits, programmable gate arrays, programmed logic units, digital signal processors, network processors, and the like.

In the present description, a storage device is at least one non-transitory or tangible storage device. A storage device can, for example, include one or more volatile storage devices, for instance random access memory, and one or more non-volatile storage devices, for instance read only memory, flash memory, magnetic hard disk, optical disk, solid state disk, and the like.

In the present description, a storage device can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.

Classical data can include processor-executable instructions that, when executed by a processor, cause the processor to control, initialize, write to, manipulate, read out, and/or otherwise send data to/from a quantum module.

Classical data can include data used or obtained by the operation of the present invention. Classical data can include data associated with, e.g., created by, referred to, changed by, a processor executing processor-executable instructions, such as, control instructions.

Quantum data or quantum information can comprise one or more qubits. A qubit or quantum bit is a logical building block of a quantum computer comparable to a binary digit in a classical digital computer. A qubit conventionally is a defined physical system having two or more discrete states called computational states or basis states. Basis states logically are analogous to binary states. These states may be labeled |0> and |1>.

As well known by the skilled person in the relevant art (see for example "Quantum entanglement", Ryszard Horodecki et al., Rev. Mod. Phys. 81, 865), an entangled state corresponds to at least two systems, for example two particles, sharing one wave function, and where the determination of a property of one of the particles determines a property of the other particle.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations. **In** some instances, well-known structures associated with semiconductor and/or optical devices and/or quantum computing and/or quantum information processing, such as targets, substrates, lenses, waveguides, shields, filters, lasers, processor-executable instructions, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Additional and/or alternative features, aspects and advantages of implementations of the present invention will become apparent from the following description, the accompanying drawings and the appended claims

The examples and conditional language recited herein are principally intended to aid the reader in understanding the principles of the present invention and not to limit its scope to such specifically recited examples and conditions. It will be appreciated that those skilled in the art may devise various arrangements which, although not explicitly described or shown herein, nonetheless embody the principles of the present invention and are included within its spirit and scope.

Furthermore, as an aid to understanding, the following description may describe relatively simplified implementations of the present invention. As persons skilled in the art would understand, various implementations of the present invention may be of a greater complexity.

In some cases, what are believed to be helpful examples of modifications to the present invention may also be set forth. This is done merely as an aid to understanding, and, again, not to define the scope or set forth the bounds of the present invention. These modifications are not an exhaustive list, and a person skilled in the art may make other modifications while nonetheless remaining within the scope of the present invention. Further, where no examples of modifications have been set forth, it should not be interpreted that no modifications are possible and/or that what is described is the sole manner of implementing that element of the present invention.

Moreover, all statements herein reciting principles, aspects, and implementations of the present invention, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present invention. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present invention.

According to an embodiment, the present invention concerns a method and system for determining scenario output items related to the evolution of a predetermined system. This approach leverages generated simulations, potentially concatenated to form a global simulation, to model system behavior. The system's evolution is assessed through the extraction of scenario output items, facilitating analysis and prediction of future states.

Advantageously, the present invention finds application across diverse fields, including financial markets, environmental systems, energy consumption networks, epidemiological models, manufacturing processes, and portfolio management systems. This versatility stems from the ability to model complex systems using statistical moments and known initial/final values.

Indeed, as described hereafter, the present invention facilitates enhanced modeling and decision-making across diverse technical domains. Financial markets benefit from portfolio management systems utilizing statistical moments of asset returns to model potential investment outcomes and manage volatility. Epidemiological models leverage infection rate distributions and statistical moments to project epidemic progression, evaluate interventions, and allocate medical resources effectively. Environmental systems and energy consumption networks can similarly employ this approach for predictive analysis and resource optimization.

According to an embodiment, the invention relates also to a system and method for generating random numbers utilizing quantum processes and classical information processing. The present invention can be applied in fields requiring high-quality random number generation, such as simulations, financial modeling, and process control. Preferably, the invention incorporates a quantum random number generation module coupled with a classical information processing module. This configuration facilitates the initiation of at least one quantum process to provide a stream of random data. A quantum process measurement module measures then the generated random data.

For example, the invention can be used to model progression of an epidemic, evaluate potential impact of interventions, and allocate medical resources. The system may also be used in manufacturing process control to monitor processes and maintain product standards.

The invention can leverage known initial and final values, along with statistical moments distributions, to enhance the accuracy of models and forecasts. The system may also incorporate scenario registration and projection phases to ensure relevance in rapidly changing conditions.

According to an embodiment, the method begins with a scenario design phase. This phase is configured to compute the initial state of a selected system, leveraging a communication module to receive input items from a first user, defining a set of trends regarding the selected system. Advantageously, this allows for user-defined scenarios. The communication module also receives at least one output item from a second user. A classical information processing module then determines the relationship between these input and output items using a predetermined process. This establishes a baseline for subsequent simulations.

According to an embodiment, the method comprises a simulation phase configured to utilize a determined relationship between input items and output items to generate a set of N simulations. Initial conditions of the system to simulate are set using the classical information processing module, based on the input items. Advantageously, this ensures consistency across simulations. A quantum random number generation module, in conjunction with the classical information processing module, generates a plurality of quantum-generated random numbers. This involves initiating at least one quantum process, measuring the resulting data stream using a measurement module, and post-processing the stream into quantum-generated random numbers, which are then stored in a storing module.

Then, preferably, the set of quantum-generated random numbers is partitioned into a first and second predetermined number of subsets. The first number is based on a criterion related to the simulating step, while the second is based on the nature of the system to be simulated. Advantageously, this allows for fine-grained control over the simulation process. For each subset, a trajectory of the system's evolution is created from its initial state to a final state over a given timeframe.

Then, advantageously, a distribution of final states is obtained using the classical information processing module, defining a global manifold of n dimensions. A threshold value is then determined, delimiting a first set of final states from a second set. This determination involves setting a given criterion, calculating a first manifold, defining another manifold, and computing the threshold value on at least the first axis. Advantageously, this allows for the identification of critical thresholds in the system's behavior.

According to an embodiment, the method comprises a selection phase configured to utilize the classical information processing unit to select a set of N generated simulations. If N is equal to 1, the scenario output item is extracted directly from the selected simulation. If N is greater than 1, the N selected simulations are concatenated into a global generated simulation, from which the scenario output item is extracted. Advantageously, this allows for the aggregation of multiple simulation runs to improve the robustness of the results.

According to an embodiment, the system may be applied to financial markets. This allows for modeling potential investment outcomes and assessing associated risks.

Indeed, the present invention can be configured to facilitate financial market modeling by leveraging quantum processing, statistical moments and distributions to project potential investment outcomes and assess associated risks.

For example, financial institutions begin with predefined indicators, often supplied by regulatory bodies, representing a hypothetical stress condition. These initial indicators are expanded to encompass all relevant risk factors to which the institution is exposed, ensuring comprehensive coverage. Scenario design allows for the creation of new scenarios from scratch, incorporating narrative and quantitative assumptions. This flexibility enables the design of scenarios that capture emerging risks or unique exposures, dynamically adapting to new market data and trends.

Preferably, the present invention involves scenario registration and projection. Scenario registration stores scenarios, including start and end dates, expansion designs, and independent variables such as daily or yearly returns, for example. Scenario projection utilizes algorithms to forecast outcomes, employing statistical moments and distributions to model potential investment outcomes. This process allows financial institutions to evaluate the potential impact of interventions, allocate medical resources effectively, and develop strategies to achieve desired financial goals while managing volatility. The use of known initial and final values, coupled with statistical moments, enhances the accuracy of models and forecasts.

Furthermore, the invention's modular design allows for integration with existing financial modeling infrastructure. The quantum random number generation module, coupled with classical information processing, can introduce stochasticity into the projection process, improving model realism and accuracy. This comprehensive approach enables financial institutions to proactively manage risk, optimize portfolio performance, and maintain compliance with regulatory requirements.

According to an embodiment, the present invention can be applied to the field of environmental systems analysis. Indeed, the present invention can be configured to offer significant utility in environmental systems analysis. Scenario registration and projection, important components of stress testing within environmental modeling, benefit from the enhanced randomness provided by the quantum source. Environmental models often rely on stochastic processes to simulate complex interactions; incorporating quantum-generated random numbers improves the fidelity of these simulations, particularly when modeling rare or extreme events like floods, droughts, or pollutant dispersion. The ability to define scenario narratives and quantitative assumptions, as described in the design phase, allows for the creation of tailored scenarios reflecting specific environmental challenges, such as the impact of climate change on water resources or the effectiveness of remediation strategies for contaminated sites.

The present invention's capacity to project outcomes by applying statistical moments and distributions is directly applicable to environmental risk assessment. For instance, modeling the progression of algal blooms or the spread of invasive species requires accurate representation of initial conditions and subsequent changes. By leveraging statistical moments of environmental variables, such as precipitation or pollutant concentrations, the invention facilitates the development of more robust predictive models.

Furthermore, the present invention's design allows for the creation of scenarios that capture emerging risks or unique exposures not covered by historical data. This is particularly valuable in addressing novel environmental challenges, such as the impact of microplastics on ecosystems or the effects of emerging contaminants. The combination of quantum randomness and statistical moment projection enables a more comprehensive and dynamic approach to environmental systems analysis, leading to improved decision-making and more effective environmental management strategies.

According to an embodiment, the present invention may be implemented within energy consumption networks. Indeed, the present invention can be configured to provide significant utility in optimizing energy consumption networks. Scenario registration and projection, as described, can model complex energy demand fluctuations and supply disruptions. Energy grid operators can utilize the present invention to model energy price volatility, renewable energy output variability (solar irradiance, wind speed), and consumer demand patterns. This allows for the creation of stress test scenarios that simulate extreme events, such as prolonged heatwaves driving up air conditioning demand or unexpected outages of renewable energy sources. The quantum random number generator provides a source of unpredictability useful for accurately simulating these stochastic events, enhancing the robustness of energy grid planning and resource allocation.

The scenario design phase allows for the creation of tailored stress tests relevant to specific energy networks. Regulatory institutions often provide initial indicators; energy providers must expand these to cover all relevant risk factors. For example, a scenario could model the impact of a sudden shift in consumer behavior towards electric vehicles, requiring significant upgrades to charging infrastructure and increased electricity demand. The ability to incorporate new market data and trends ensures that the scenario modeling remains dynamic, allowing for proactive adaptation to evolving energy landscapes. Furthermore, the present invention's ability to project outcomes based on statistical moments allows for the evaluation of potential interventions, such as demand response programs or investments in energy storage, to mitigate the impact of adverse scenarios.

Implementation within energy consumption networks involves integrating the scenario registration and projection framework with real-time data streams from grid sensors, weather forecasts, and market pricing signals, for example. The quantum random number generator ensures the stochasticity of simulated events, while the classical processing module manages the calculations and data analysis. This allows for the creation of a closed-loop system where the results of stress tests inform operational decisions, leading to a more resilient and efficient energy infrastructure. The present invention's flexibility enables institutions to design scenarios that capture emerging risks or unique exposures not covered by historical data, ensuring continuous improvement in energy network management.

According to an embodiment, the system can be applied to epidemiological models. Indeed, the present invention can be configured to facilitate enhanced epidemiological modeling through the incorporation of statistical moments and distribution analysis. Initial conditions, such as infection rates and mortality data, are leveraged alongside statistical moments to project epidemic progression. This allows health officials to model the potential impact of interventions and allocate medical resources effectively. The present invention's flexibility enables the creation of novel scenarios, incorporating emerging risks and unique exposures not captured by historical data, thereby improving the accuracy and relevance of epidemiological forecasts.

The scenario design phase allows for the creation of new epidemiological scenarios from scratch. This involves defining both narrative and quantitative assumptions related to disease transmission, population demographics, and intervention strategies. Regulatory institutions can provide initial indicators, which are then expanded to cover all relevant risk factors. This ensures comprehensive modeling of disease spread and potential societal impact.

Furthermore, the system's ability to project outcomes by applying statistical moments allows for a more nuanced understanding of epidemic behavior. This approach moves beyond simple deterministic models, accounting for the inherent uncertainty and variability in disease transmission. The resulting insights can inform public health policy decisions, optimize resource allocation, and ultimately mitigate the impact of future epidemics. The present invention's modular design allows for seamless integration with existing epidemiological modeling platforms.

According to an embodiment, the present invention can be used in manufacturing processes. Indeed, the present invention can be configured to facilitate enhanced process control within manufacturing environments by leveraging statistical moments distributions. Initial and final quality measurements, characteristic of semiconductor manufacturing for example, can be analyzed to detect process deviations and forecast potential defects. This analysis utilizes known initial and final values alongside statistical moments, enabling the proactive implementation of corrective actions and maintenance of stringent product standards. The present invention's ability to model progression and outcomes based on statistical distributions allows for a dynamic and responsive approach to quality assurance.

The scenario design phase allows for the creation of new scenarios from scratch, incorporating quantitative assumptions and relevant risk factors. This flexibility enables manufacturers to design scenarios that capture emerging risks or unique exposures not covered by historical data or regulatory requirements.

Furthermore, the present invention's ability to project outcomes by applying statistical moments allows for the allocation of resources effectively. By modeling potential defects and their impact, manufacturers can proactively adjust production parameters and resource allocation to minimize disruptions and maintain operational efficiency. The integration of the present invention into existing manufacturing processes provides a robust framework for continuous improvement and proactive risk management, ultimately leading to enhanced product quality and reduced operational costs.

According to an embodiment, the present invention can be implemented for portfolio management systems. Indeed, the present invention can be configured to facilitate enhanced financial portfolio management through the application of statistical moments distributions. Initial asset values and target returns are leveraged to model potential investment outcomes and assess associated risks. This approach allows investors to develop strategies aimed at achieving desired financial goals while actively managing volatility, improving upon traditional methods that may lack granularity.

The present invention incorporates, advantageously, a scenario design phase enabling the creation of customized scenarios from scratch. This involves defining both narrative and quantitative assumptions encompassing all relevant risk factors, allowing for the capture of emerging risks or unique exposures not addressed by historical data or regulatory requirements, for example. Regulatory institutions may provide a subset of indicators, which the financial institution expands to cover broader exposures, ensuring comprehensive risk assessment prior to stress testing.

Furthermore, the integration of a quantum random number generation module, coupled with classical information processing, introduces a layer of unpredictability and robustness to the modeling process. This module provides a stream of random data generated by a quantum process, enhancing the accuracy of projections and facilitating more informed decision-making within the portfolio management system.

According to an embodiment, the present invention can be used in supply chains and delivery systems. Indeed, the present invention, leveraging quantum random number generation and scenario projection processes, can be configured to offer significant advantages in optimizing supply chain and delivery systems. The scenario design phase allows for the creation of simulations incorporating emerging risks, such as geopolitical instability or sudden shifts in consumer demand, which directly impact logistics and transportation. These simulations can model disruptions to supplier networks, fluctuating fuel costs, and unexpected delays in delivery routes, enabling proactive risk mitigation strategies. The ability to incorporate new market data trends within these scenarios ensures that the system remains adaptable to evolving supply chain dynamics, facilitating robust decision-making regarding inventory management, route optimization, and resource allocation.

Preferably, the functionality of the invention, for example the roll-forward algorithm or the principal component analysis algorithm, can be applied to forecast demand and optimize delivery schedules. Historical supply chain data, including lead times, transportation costs, and inventory levels, can be analyzed using principal component analysis algorithm to identify key variables influencing performance. A principal component analysis algorithmMonte Carlo expansion algorithm can then generate numerous simulations, each representing a plausible future scenario, allowing for the assessment of potential bottlenecks and vulnerabilities within the delivery network. This predictive capability enables preemptive adjustments to logistics planning, minimizing disruptions and improving overall efficiency.

Furthermore, the present invention's ability to generate quantum-based random numbers enhances the robustness of simulations by introducing a degree of unpredictability that more accurately reflects real-world conditions. This is particularly valuable in modeling complex, interdependent supply chains where unforeseen events can have cascading effects. The ability to register and project these scenarios allows for continuous monitoring and refinement of supply chain strategies, ensuring resilience and responsiveness to dynamic market conditions and potential disruptions.

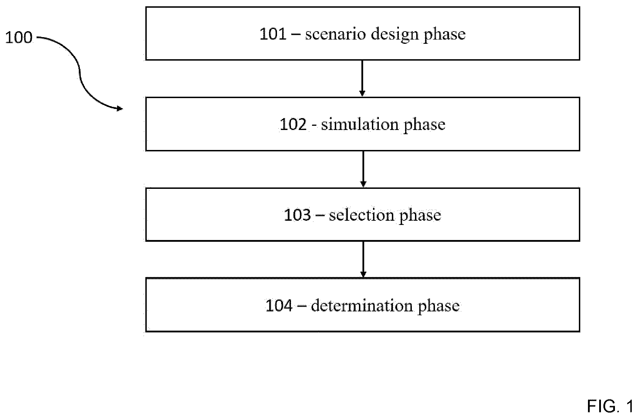

**According** to an embodiment, and as illustrated by figures 1, 2, 3 and 4, the present invention relates to a computer-implemented method for determining at least one scenario output item regarding the evolution of a predetermined system. As described hereafter, the method is configured to be executed by at least one computing system.

According to an embodiment, the method 100 comprises:
- A scenario design phase 101 configured to compute the initial state of a system;
- A simulation phase 102 of the evolution of the generated scenario;
- A selection phase 103 of a set of N generated simulations;
- A determination phase 104 of at least one scenario output item regarding the system.

Preferably, the scenario design phase 101 comprises:
∘ Selecting a system to evaluate by a first user using a communication module;
∘Receiving, by the communication module, input items, the input items being configured to define a set of trends regarding the selected system;
∘ Selecting at least one output item by a second user using a communication module; and
∘ Determining, using at least one classical information processing module, the relationship between the input items and the output items using a predetermined process;

Preferably, the simulation phase 102 of the evolution of the generated scenario comprises generating a set of N simulations according to the output items using the determined relationship.

According to an embodiment, the generation step can be implemented using various technologies such as classical Monte Carlo simulation, or Quantum Monte Carlo approach, or quantum-inspired approaches or even quantum emulated solutions.

According to a preferred embodiment, the generation step comprises:
▪ Setting 110, using at least one processing module 210, initial conditions of the system according to the input items;
▪ Acquiring 120 at least one set of quantum-generated random numbers, using a communication module 240;
▪ Simulating 130, using the processing module 210 and the set of quantum-generated random numbers, the time evolution of the initial state of the system to obtain at least one plurality of final states of the system,
▪ Obtaining 140, using the classical information processing module 210, a distribution of a plurality of final states according to at least one first axis by organizing the plurality of final states based on predetermined rules, said distribution defining a global manifold of n dimensions, n being equal or greater than 1;
▪ Determining 150, using the classical information processing module 210, at least one threshold value among the plurality of final states, said threshold value delimiting a first set of final states from a second set of final states.

According to an embodiment, the step of acquiring 120 the set of quantum-generated random numbers comprises:
a. Generating, using the classical information processing module 210 and at least one quantum random number generation module 220, a plurality of quantum-generated random numbers;
b. Selecting, using the processing module 210, a set of quantum-generated random numbers among the plurality of quantum-generated random numbers.

According to an embodiment, the step of generating the plurality of quantum-generated random numbers comprises at least:
a. Initiating at least one quantum process, using the classical information processing module 210 and the quantum random number generation module 220, said quantum random number generation module 220 comprising preferably at least one output configured to provide a stream of random data generated by the quantum process;
b. Measuring at least one stream of random data from said output of this quantum random number generation module 220 using a measurement module 230;
c. Post-processing, using the classical information processing module 210, the stream of random data to convert the stream of random data into at least one plurality of quantum-generated random numbers;
d. Storing the quantum-generated random numbers in at least one storing module 250.

According to an embodiment, the step of simulating 130 the time evolution of the initial state of the system to obtain at least one plurality of final states of the system comprises at least:
a. Partitioning the set of quantum-generated random numbers into a first predetermined number of subsets of quantum-generated random numbers, each subset of the predetermined number of subsets of quantum-generated random numbers comprising a second predetermined number of quantum-generated random numbers. Preferably, the first predetermined number is based on a first criterion, also called precision threshold, related to parameters of the simulating step. Advantageously, the second predetermined number is based on a second criterion related to the nature of the system.
b. For each subset of the predetermined number of subsets of quantum-generated random numbers, creating at least one trajectory of the evolution of the state of the system from its initial state to at least one final state over the given timeframe.

According to an embodiment, the step of determining 150 the threshold value comprises:
a. Setting a given criterion, for example a level of confidence;
b. Calculating a first manifold of n+1 dimension based on said given criterion under the manifold of n dimension, said first manifold corresponding to said first set of final states, said first manifold being a part of a global manifold of n+1 dimensions;
c. Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
d. Computing the at least one threshold value on at least the first axis, this threshold value corresponding to at least one intersection of the first axis with the another manifold of n dimensions.

Therefore, according to an embodiment, the present invention can begin by setting initial conditions for the system using at least one classical information processing module 210, which may involve classical information processing techniques. Next, a set of quantum-generated random numbers is acquired by initiating a quantum process using the classical information processing module 210 and the quantum random number generation module 220, which may involve quantum information processing techniques. The quantum process generates a stream of random data, which is measured and post-processed to convert it into a usable form. The quantum-generated random numbers are then stored for use in the simulation.

Preferably, the set of quantum-generated random numbers is selected and used to simulate the time evolution of the initial state of the system. This can involve partitioning the set of random numbers into subsets, creating trajectories for each subset, and organizing the final states into a distribution based on predetermined rules. The distribution defines a global manifold of n dimensions, where n is equal or greater than 1.

Then, according to an embodiment, at least one threshold value is determined by setting the given criterion and calculating the first manifold of n+1 dimensions based on this criterion under the manifold of n dimensions. A second manifold is preferably defined to separate the first manifold from a second manifold of n+1 dimensions, forming the global manifold of n+1 dimensions. The threshold value is then advantageously computed as the intersection of the first axis with the second manifold of n dimensions.

The use of quantum random numbers in this context offers several potential advantages over classical methods. Quantum random numbers are truly random and cannot be predicted or manipulated. Additionally, the ability to simulate complex systems using quantum-generated random numbers could lead to more accurate and efficient threshold determination compared to classical methods.

According to an embodiment, the value of 'n' is equal to 1. **In** this scenario, the plurality of final states is distributed in such a manner that they collectively define a curve. The first manifold, in this context, is shaped to form a surface under this defined curve. Furthermore, the another manifold is configured to define a line, preferably that intersect an axis, providing the threshold value.

According to an embodiment, the value of 'n' can be equal to 2. **In** this embodiment, the distribution of these final states defines a surface. Advantageously, defining a surface from the distribution of final states allows for a more complex analysis and interpretation of the results obtained during the process. Furthermore, according to an embodiment, the first manifold defines a volume under this defined surface. The choice of using a first manifold in this manner provides a three-dimensional context to the data points represented by the final states. Preferably, the another manifold creates a surface.

According to an embodiment, a quantum process comprises transformations of at least one quantum state through a specific set of operations. Preferably these specific set of operations are carefully chosen and defined to ensure control over the quantum state being transformed. The selection of these operations is useful for achieving the desired outcome in the quantum process. Advantageously, this approach allows for the manipulation and control of quantum states in a controlled manner. Preferably, the specific set of operations is designed to minimize errors and maximize efficiency during the transformation process. This optimization ensures that the quantum state is transformed accurately. It should be noted that the choice of these specific set of operations can depend on various factors, including the type of quantum system being used, the desired outcome of the transformation, and the resources available for implementing the operations. **In** some embodiments, the transformation process may involve multiple stages, with each stage consisting of a different set of operations designed to bring about the overall transformation of the quantum state. This multi-stage approach can provide greater control over the transformation process and improve the accuracy of the final result. Advantageously, the specific set of operations used in the present invention can be tailored to suit the requirements of different applications or use cases, making it a versatile tool for harnessing the power of quantum mechanics.

According to an embodiment, the present invention can comprise performing a quantum coin flip process to generate the quantum-generated random numbers. Preferably, the present invention can use one qubit. This process simulates the tossing of a fair coin in classical computing, but with the unique properties of quantum mechanics, such as superposition and entanglement, being leveraged.

According to another embodiment, the present invention can comprise using at least one quantum measurement process conducted on an entangled qubit system. The purpose of this quantum process is to obtain random outcomes from the probabilistic results produced.

According to an embodiment, the step of setting initial conditions of the system comprises defining a set of key variables related to an initial state of the system, i.e. to the input items. Preferably, these key variables are chosen based on their relevance and significance in determining the behavior of the system at its initial state. The choice of these key variables may depend on the nature and characteristics of the system being studied or modeled. It is to be understood that the specific set of key variables defined may vary depending on the particular application of the present invention.

Preferably, the present invention comprises attributing at least one value to each variable of the set of key variables. This ensures that the system has a defined starting point for its operation and analysis. It should be noted that the values assigned to these variables can be static or dynamic, depending on the nature of the system and the requirements of the present invention.

According to an embodiment, the quantum random number generation module 220 can be specifically designed to use a plurality of qubits, which are quantum two-state systems capable of representing both 0 and 1 simultaneously in a superposition state.

According to an embodiment, the selection phase 103 comprises selecting a set of N generated simulations comprising the set of trends defined by the input items.

According to an embodiment, the determination phase 104 comprises:
∘ If N is equal to 1, extracting the scenario output item value from the selected generated simulation;
∘ If N is greater than 1:
   ▪ concatenating the N selected generated simulations into one global generated simulation, and
   ▪ Extracting the scenario output item value from the global generated simulation.

According to an embodiment, a robot may function as the first and/or second user. This allows for automated initiation and interaction with the present invention. Preferably, an artificial intelligence (AI) or an Al agent can serve as the first and/or second user. This enables automated scenario design and projection. The first and/or second user can also be a human.

According to an embodiment, input items are organized as a list of parameters. This structured approach allows for granular control and manipulation of input data. Each parameter can represent a specific variable within the broader input set.

These parameters can incorporate both historical data and synthetic data. Historical data provides a baseline derived from past observations. Synthetic data offers a means to augment or simulate scenarios beyond the scope of historical records or when there is no historical data to be used.

For example, synthetic data may be generated to model extreme or hypothetical conditions not adequately represented in historical datasets. This combination allows for a more robust and versatile modeling capability. The use of synthetic data can also mitigate biases inherent in historical data.

According to an embodiment, the present invention can be configured to simulate the synthetic dara. To do so, the present invention can comprise a step of simulating synthetic data by:
- Selecting an anchoring date
- Selecting a time frame for the synthetic data, the selected time frame comprising a plurality of moments;
- Obtaining the historical data of the at least one independent variable at the anchoring date
- Obtaining the values of at least one parameter of the independent variable over the selected time frame;
- Selecting a target value of the parameter for the last moment of the selected time frame;
- Generating M simulations by simulating M times a plurality of sub-time frames over the entire selected time frame, using a geometric Brownian motion based on the values of the parameter and at least one stochastic term;
- Selecting among the M simulations, a set of K generated simulations wherein the value of the parameter at the end of the time frame minus the target value is lower than a predetermined threshold:
- Obtaining the synthetic data by:
   ∘ If K is equal to 1, extracting the synthetic data from the selected simulation;
   ∘ If K is greater than 1 :
      ▪ Calculating the mathematical average of the M simulations; and
      ▪ Extracting the synthetic data from the mathematical average of the M simulations.

Advantageously, the present invention utilizes predetermined initial conditions for synthetic data generation. These initial conditions are associated with at least one independent variable, enabling controlled simulation environments.

Preferably, the predetermined initial conditions provide a defined starting point for simulations, allowing for repeatable and predictable outcomes. This contrasts with systems that may rely on randomly assigned initial states.

Advantageously, associating initial conditions with independent variables allows for targeted manipulation and analysis of simulation parameters. This facilitates a deeper understanding of system behavior under specific conditions.

For example, in financial portfolio management, a predetermined initial asset value, linked to an independent variable like market volatility, can be used to model investment outcomes.

Preferably, to simulate these synthetic data, a geometric Brownian motion model may be employed. This model provides a framework for generating time series data with stochastic behavior.

Advantageously, a stochastic term is incorporated within the geometric Brownian motion model to introduce randomness into the simulation process. This term contributes to the unpredictable nature of the generated data.

According to an embodiment, multiple simulations (M simulations) may be generated, and a subset of these simulations is selected based on a predetermined threshold. This filtering process refines the generated data.

Preferably, a predetermined threshold is used to filter simulations based on a parameter's deviation from a target value. This threshold defines the acceptable range of variation for the simulated parameter.

For example, a subset of K generated simulations is selected based on the predetermined threshold. This selection process reduces the number of simulations to a manageable set.

Advantageously, when K is greater than 1, a mathematical average of the M simulations is calculated. This averaging technique combines the information from multiple simulations to produce a more representative result.

According to an embodiment, the present invention is configured to get an output item that incorporates historical data. This allows for trend analysis and retrospective evaluation of simulated scenarios.

Preferably, the output item is formatted as at least one time series. This facilitates visualization and quantitative assessment of temporal dependencies within the simulated data.

If the output item does not comprise historical data, then the present invention comprises the following steps:
- a step of identifying a set of J sub-output items, each sub-output item being associated with at least one dependent variable comprising historical data and being related to the output item.
- If J is equal to 1, then:
   ∘ Setting at least one rolling window period for computing at least one adjusted beta;
   ∘ Retrieving historical data of the dependent variable at the anchoring date, the historical data comprising a plurality of time series;
   ∘ Assembling the historical data, preferably the plurality of time series, of the dependent variable;
   ∘ Retrieving historical and/or scenario data of the independent variable;
   ∘ Computing, based on a predetermined time window:
      ▪ A first difference of value between the value of the independent variable before and after the time window; and
      ▪ A second difference of value between the value of the dependent variable before and after the time window;
   ∘ Obtaining a mathematical equation of a curve by performing a linear regression of the second difference of values on the first difference of value, for each rolling window over the historical data;
   ∘ Extracting at least one slope of the curve using the mathematical equation, the at least one slope corresponding to the raw beta;
   ∘ Adjusting the raw beta using the following equation : Adjusted Beta = A * (Raw Beta) + B
   ∘ For each first difference of value along the historical data:
      ▪ defining an interval around that value and
      ▪ filtering the historical data to collect corresponding second difference value and raw beta.
   ∘ Computing a new beta, preferably using at least one among a statistics mean, median, or quantiles of filtered betas;
   ∘ Estimating the log of the second difference of values by multiplying this new beta by the first difference of value (alternatively, use the statistics mean, median, or quantiles dependent return directly).
   ∘ Converting the estimated log into a predetermined multiplicative factor via an exponential function,
   ∘ Updating the dependent variable's value by multiplying its prior value by the predetermined multiplicative factor.
- If J is greater than 1, then:
   ∘For each sub-output:
      - Selecting at least one independent variable;
   ▪ For each independent variable:
      - obtaining historical data;
      - Concatenating the historical data and input items to have a unique time series per independent variable
   ∘ Computing the Principal Component Analysis (PCA) of the independent variables:
      ▪ Putting all the time series into a matrix
      ▪ Calculating the co-variance of the matrix
      ▪ Decomposing the co-variance matrix into its proper vectors ▪ Selecting the proper vector associated with the highest proper value, the proper vector corresponding to the unique time series comprising a linear combination of the time series.

For example, the present invention may utilize a Geometric Brownian Motion Model to generate time series data representing asset returns, which is then incorporated into the output item.

According to an embodiment, a rolling window period is utilized to compute adjusted beta values.

Advantageously, the anchoring date serves as a reference point for retrieving relevant historical data.

Then, for example, the first difference of value is calculated between independent variable values before and after the defined time window. This quantifies the change in the independent variable over time.

Preferably, the second difference of value is computed between dependent variable values before and after the same time window. This provides a measure of the rate of change of the dependent variable.

Then, linear regression can be performed on the calculated differences to establish a curve representing the relationship between the independent and dependent variables. Advantageously, the slope of the regression equation is extracted to obtain a raw beta value. This represents an initial estimate of the relationship's sensitivity between the sub-output item and the output item, for example.

Then, an adjusted beta equation, utilizing coefficients A and B, refines the raw beta value.

After that, an interval can be defined around the first difference value. This allows for the identification of outliers or unusual data points.

Historical data can then be filtered based on the defined interval. This ensures that only relevant data is used in subsequent calculations.

Statistics, such as the mean, median, or quantiles, can be used to aggregate beta values and compute a new beta value. This provides a more robust and representative measure of the relationship between the sub-outputs and the output items.

Historical data and input items are then preferably concatenated to create a unique time series for each independent variable associated with at least one output item.
In some cases, principal component analysis can be performed on the concatenated time series. This reduces dimensionality and identifies underlying patterns.

For example, the covariance matrix is decomposed into proper vectors and proper values during principal component analysis. This allows for the identification of the most significant components.

Preferably, a unique time series is generated through a linear combination of time series using principal component analysis . This represents a composite view of the data.

According to an embodiment, after the step of selecting at least one output item, a target value is selected, wherein the target value represents a predetermined future value of at least one output item. This allows for a comparison between predicted outcomes and expected future states.

Advantageously, the target value can be predetermined, meaning it is known prior to the simulation or analysis. For example, the target value may represent an expected financial return, a projected atmospheric CO level, or a desired quality metric in a manufacturing process. This facilitates targeted evaluation and refinement of the underlying models.

According to an embodiment, the selection phase comprises filtering generated simulations to retain only those matching target values within a predetermined tolerance value at each specified moment. This action refines the simulation set, focusing on those closest to the desired outcome.

Preferably, if not only one simulation meets the predetermined tolerance value at each specified moment, a mathematical distance can be measured between each simulation and a target profile. This measurement provides a quantitative assessment of deviation.

Advantageously, the simulation exhibiting the minimal distance to the target profile is then selected. For example, the mathematical distance may be calculated using the Euclidean norm. This provides a standardized method for quantifying the difference between simulations.

According to an embodiment, the specified moment refers to discrete, defined points in time during the simulation period. This allows for granular evaluation of simulation performance. Preferably, the target profile can encompass multiple values or characteristics representing the desired simulation outcome. Advantageously, the use of a tolerance value provides a flexible threshold for determining acceptable simulation performance.

The concatenation step can comprise calculating a mathematical statistical value, such as the mean, median, or quantiles, at each time step. This aggregation of N selected generated simulations generates a global generated simulation

For example, the concatenation step may involve selecting one generated simulation among the N selected generated simulations. This selection is performed according to a predetermined set of rules. This predetermined set of rules can, for example, comprises:
- Selecting the simulation corresponding to the most positive scenario regarding a set of requirements;
- Selecting the simulation corresponding to the most negative scenario regarding a set of requirements;
- Selecting the simulation corresponding to the set of trends according to a predetermined narrative;
- Selecting a simulation according to a predetermined risk level.

According to an embodiment, the present invention relates to a computerized system configured for determining at least one scenario output item regarding the evolution of a predetermined system.

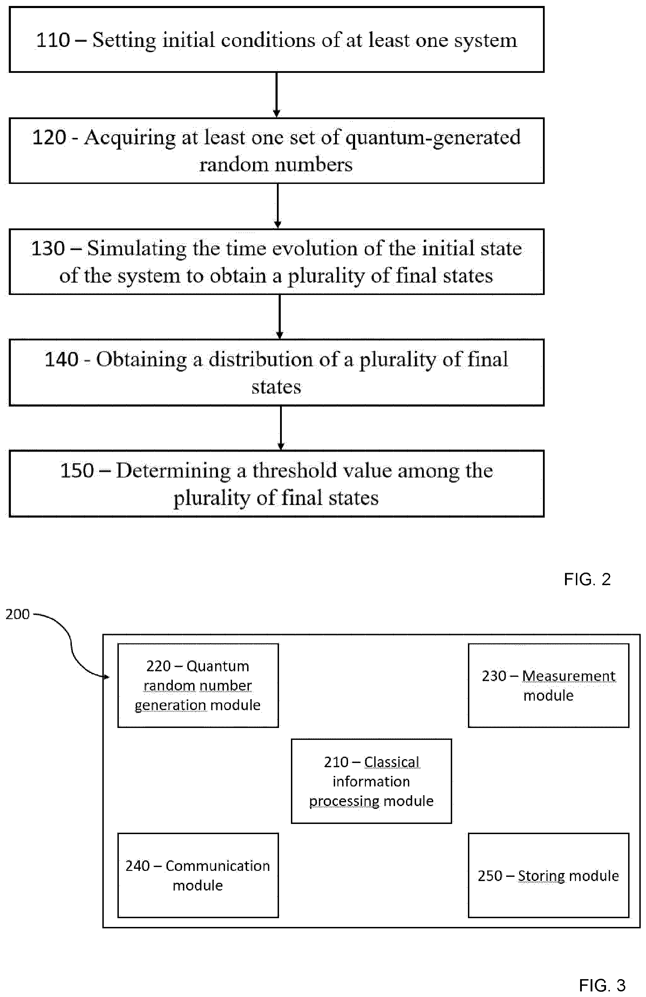

Preferably, and as illustrated by figure 3, the computerized system comprises a communication module 240, classical information processing 210, quantum random number generation 220 modules, a measurement module 230 and a storage module 250.

According to an embodiment, the communication module 240 can be configured to:
- Receive a selection of a system to evaluate from a first user;
- Receive input items defining a set of trends regarding the selected system; and
- Receive a selection of at least one output item from a second user.

According to an embodiment, the communication module facilitates interaction between the first and second user with the system. Preferably, the module can incorporate a Graphical User Interface (GUI) allowing the first and second user to input trend-defining items, potentially numerical data representing market conditions or system parameters.

The communication module can incorporate authentication and authorization protocols. Preferably, these protocols utilize multi-factor authentication to ensure secure access to the system. Advantageously, role-based access control could restrict certain functionalities to authorized personnel, enhancing data security and operational integrity.

According to an embodiment, the classical information processing module 210 is configured to:
a. Determine the relationship between the input items and the output items using a predetermined process;
b. Set initial conditions of the system according to the input items;
c. Post-process streams of random data into a plurality of quantum-generated random numbers;
d. Select a set of quantum-generated random numbers;
e. Partition the selected set of quantum-generated random numbers into a first predetermined number of subsets, each subset comprising a second predetermined number of quantum-generated random numbers, wherein the first predetermined number is based on a first criterion related to parameters of a simulation step and the second predetermined number is based on a second criterion related to the nature of the system;
f. Simulate the time evolution of the initial state of the system using the set of quantum-generated random numbers to obtain a plurality of final states of the system, wherein simulating comprises creating at least one trajectory for each subset of quantum-generated random numbers representing the evolution of the state of the system from its initial state to at least one final state over a given timeframe;
g. Obtain a distribution of the plurality of final states according to at least one first axis by organizing the plurality of final states based on predetermined rules, said distribution defining a global manifold of n dimensions, n being equal or greater than 1;
h. Determine at least one threshold value among the plurality of final states, wherein determining comprises: setting a given criterion, calculating a first manifold of n+1 dimension based on said given criterion under the manifold of n dimension, defining another manifold of n dimension configured to separate the first manifold of n+1 dimension from a second manifold of n+1 dimensions, and computing the at least one threshold value on at least the first axis corresponding to at least one intersection of the first axis with the another manifold of n dimensions;
i. Select a set of N generated simulations from the plurality of final states, wherein the selected simulations comprise the set of trends defined by the input items; and
j. Determine at least one scenario output item regarding the system based on the selected simulations, wherein if N is equal to 1, the scenario output item is extracted from the selected simulation, and if N is greater than 1, the N selected generated simulations are concatenated into a global generated simulation from which the scenario output item is extracted.

According to an embodiment, the quantum random number generation module 220 is configured to cooperate with the classical information processing module 210 to generate the plurality of quantum-generated random numbers.

Preferably, the quantum random number generation module comprises at least one output configured to provide a stream of random data generated by the quantum process, thanks to the measurement module 230.

Advantageously, the quantum random number generation module 220 is configured to:
- Initiate at least one quantum process; and
- Provide a stream of random data generated by the quantum process.

According to an embodiment, the measurement module 230 is configured to measure at least one stream of random data from said output of this quantum random number generation module.

According to an embodiment, the storing module is configured to store the quantum-generated random numbers

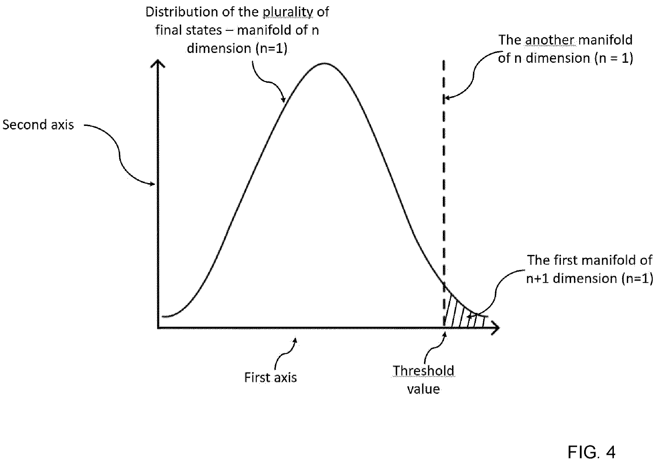

According to an embodiment, and as illustrated by figure 4, the present invention can comprise the following steps:
a. Initially, a plurality of qubits are utilized. Preferably, these qubits can be either superconducting qubits or ions trapped qubits, for example or any kind of qubits. The use of various kinds of qubits provides flexibility and versatility to the present invention.
b. In a subsequent step, quantum operations are performed on the plurality of qubits. These operations can include but are not limited to initialization, manipulation, measurement, and entanglement. The choice of qubit type may influence the specific quantum operations used due to their properties.
c. Advantageously, the present invention comprises the manipulation and measurement of quantum states in a controlled manner, enabling the execution of various quantum algorithms.

According to an embodiment, the present invention can be at least partially implemented in a quantum computing system, which may include additional components such as control electronics, cooling systems, and interconnects to facilitate the quantum operations. The specific design of the quantum computing system will depend on the chosen qubit type and the intended application, for example.

According to an embodiment, the present invention comprises a step of preparing a set of qubits in a uniform superposition state. This can be achieved by applying appropriate quantum operations to the qubits such that they exist in a linear combination of their possible states, for example. Then, preferably, each qubit from the set is measured using at least one measurement module 230. The measurement process collapses the superposition state of the qubit into one of its basis states, which can be represented as a binary value 0 or 1, for example. The measurements are then post-processed by converting the binary values into decimal values using classical information processing module 210. This conversion is necessary to obtain the final random numbers from the binary data obtained from the measurement process. Advantageously, the method can be repeated until a predetermined number of quantum-generated random numbers is reached. The repetition ensures that a sufficient number of random numbers are generated for various applications, for example.

Advantageously, this method allows for the generation of truly random numbers using quantum mechanics principles. The use of qubits in superposition states and their measurement provides an inherent randomness that cannot be achieved through classical methods alone.

Preferably, the classical information processing module 210 can be a computerized system or any other device capable of performing arithmetic operations on binary data. Additionally, the measurement module 230 can be photodetectors, superconducting quantum interference devices (SQUIDs), or any other suitable quantum sensors.

According to an embodiment, the present invention can comprise a specific step for putting the set of qubits from the plurality of qubits into a uniform superposition state, preferably using a set of Hadamard gates. Advantageously, the use of Hadamard gates ensures that each qubit in the set is evenly distributed across the possible states, thereby creating a uniform superposition state. Preferably, the Hadamard gates are applied to each qubit in the set sequentially, with the output of one gate serving as the input for the next. This process is repeated until all qubits have been transformed by a Hadamard gate.

It should be noted that while the use of Hadamard gates is preferred, alternative methods for creating a uniform superposition state may also be employed, provided they achieve the same result. The specific choice of method will depend on various factors such as the number of qubits, the available hardware, and the desired level of control over the superposition state.

In addition, it is important to ensure that the Hadamard gates are properly calibrated and aligned to minimize errors and maintain the integrity of the superposition state. This can be achieved through various techniques such as feedback control, error correction codes, or quantum error detection and correction methods.

According to an embodiment, the measurement module 230 comprises at least one pulse emitter and at least one detector. Preferably, the pulse emitter serves to emit pulses of energy, which can be electromagnetic, magnetic, or any other suitable form, for the purpose of measurement. The detector, on the other hand, is advantageously designed to receive and process signals resulting from the interaction between the emitted pulses and the qubit(s) under measurement.

Preferably, the pulse emitter and the detector are strategically positioned within the measurement module 230 to ensure optimal interaction with the qubit(s) under measurement. This arrangement allows for precise and accurate measurements to be obtained. It is to be noted that the use of a single pulse emitter and detector configuration may suffice, but multiple configurations can also be employed for enhanced measurement capabilities. For instance, multiple pulse emitters can be used to cover a wider area or to provide more detailed measurements, while multiple detectors can help in improving the accuracy and reliability of the measurements by cross-verifying the data obtained from each detector.

According to an embodiment, the simulation process can be carried out using at least one of two distinct approaches: Monte Carlo or Geometric Brownian Motion.

Preferably, the Monte Carlo approach involves using the quantum-generated random numbers to compute the probabilities of various outcomes in a given system. The results of these simulations can be represented graphically as densities of Monte Carlo simulations. For instance, Figure 6 illustrates such a graph, where the dashed line indicates the Value at Risk at the 99% confidence interval for an embodiment of the present invention discussed hereafter.

Advantageously, the Geometric Brownian Motion approach models the random movement of a quantity (such as a financial asset price) over time, using continuous-time stochastic calculus. This method is particularly useful in finance to describe the dynamics of stock prices and other assets that exhibit diffusion processes.

It should be noted that while both approaches can be used interchangeably depending on the specific requirements of the system being modeled, Monte Carlo simulations may provide a more intuitive understanding of the probabilities involved, whereas Geometric Brownian Motion offers a mathematically rigorous and continuous description of the time evolution of the system. These two approaches provide better results using quantum-generated random numbers than using pseudo-random numbers.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present invention may become apparent to those skilled in the art. The foregoing description is intended to be exemplary rather than limiting. The scope of the present invention is, therefore, intended to be limited solely by the scope of the appended claims.

## Claims

1. A computer-implemented method (100) for determining at least one scenario output item value regarding the evolution of a predetermined system, the method (100) being configured to be executed by at least one computing system (200), the method (100) comprising:
• A scenario design phase (101) configured to compute the initial state of a system, the scenario design phase comprising:
∘ Selecting a system to evaluate by a first user using a communication module (240);
∘ Receiving, by the communication module (240), input items, the input items being configured to define a set of trends regarding the selected system;
∘ Selecting at least one output item by a second user using a communication module (240); and
∘ Determining, using at least one classical information processing module (210), the relationship between the input items and the output items using a predetermined process;
• A simulation phase (102) of the evolution of the generated scenario comprising generating a set of N simulations according to the output items using the determined relationship, this generation step comprising:
∘ Setting (110), using the classical information processing module (210), initial conditions of the system according to the input items;
∘Acquiring (120) at least one set of quantum-generated random numbers, using a communication module (240), by at least:
▪ Generating, using the classical information processing module (210) and at least one quantum random number generation module (220), a plurality of quantum-generated random numbers, by at least:
• Initiating at least one quantum process using the classical information processing module (210) and the quantum random number generation module (220), said quantum random number generation module comprising at least one output configured to provide a stream of random data generated by the quantum process;
• Measuring at least one stream of random data from said output of this quantum random number generation module (220) using a measurement module (230);
• Post-processing, using the classical information processing module (210), the stream of random data to convert the stream of random data into plurality of quantum-generated random numbers;
• Storing the quantum-generated random numbers in at least one storing module (250);
▪ Selecting, using the processing module (210), the set of quantum-generated random numbers;
∘Simulating (130), using the processing module (210) and the set of quantum-generated random numbers, the time evolution of the initial state of the system to obtain at least one plurality of final states of the system, the simulating step comprising at least:
▪ Partitioning the set of quantum-generated random numbers into a first predetermined number of subsets of quantum-generated random numbers, each subset of the predetermined number of subsets of quantum-generated random numbers comprising a second predetermined number of quantum-generated random numbers, the first predetermined number being based on a first criterion related to parameters of the simulating step, the second predetermined number being based on a second criterion related to the nature of the system;
▪ For each subset of the predetermined number of subsets of quantum-generated random numbers, creating at least one trajectory of the evolution of the state of the system from its initial state to at least one final state over a given timeframe;
∘ Obtaining (140), using the classical information processing module (210), a distribution of a plurality of final states according to at least one first axis by organizing the plurality of final states based on predetermined rules, said distribution defining a global manifold of n dimensions, n being equal or greater than 1;
∘ Determining (150), using the classical information processing module (210), at least one threshold value among the plurality of final states, said threshold value delimiting a first set of final states from a second set of final states, the determining step comprising:
▪ Setting a given criterion;
▪ Calculating a first manifold of n+1 dimension based on said given criterion under the manifold of n dimension, said first manifold corresponding to said first set of final states, said first manifold being a part of a global manifold of n+1 dimensions;
▪ Defining another manifold of n dimension configured to separate the first manifold of n+1 dimension from a second manifold of n+1 dimensions, the global manifold of n+1 dimensions being formed by at least the first manifold of n+1 dimension and the second manifold of n+1 dimensions;
▪ Computing the at least one threshold value on at least the first axis, this threshold value corresponding to at least one intersection of the first axis with the another manifold of n dimensions;
• A selection phase (103) , using the classical information processing unit, of a set of N generated simulations a set of simulations, the simulations of the set of simulations comprising the set of trends defined by the input items;
• A determination phase (104), using the classical information processing unit, of at least one scenario output item value regarding the system, the determination phase comprising:
∘ If N is equal to 1, extracting the scenario output item value from the selected generated simulation;
∘ If N is greater than 1:
▪ Concatenating the N selected generated simulations into one global generated simulation, and
▪ Extracting the scenario output item value from the global generated simulation.

2. The method (100) according to the previous claim wherein the system under evaluation is selected from the group consisting of: financial markets, environmental systems, energy consumption networks, epidemiological models, manufacturing processes, and portfolio management systems

3. The method (100) according to any of the previous claims wherein input items comprise a list of parameters, each parameter comprising data taken among at least one of the following data: historical data and synthetic data.

4. The method (100) according to the previous claim wherein the synthetic data are generated based on at least one predetermined initial condition associated with at least one independent variable.

5. The method (100) according to the previous claim wherein the generation of the synthetic data comprises simulating the synthetic data.

6. The method (100) according to the previous claim wherein the step of simulating the synthetic data comprises at least:
• Selecting an anchoring date
• Selecting a time frame for the synthetic data, the selected time frame comprising a plurality of moments;
• Obtaining the historical data of the at least one independent variable at the anchoring date
• Obtaining the values of at least one parameter of the independent variable over the selected time frame;
• Selecting a target value of the parameter for the last moment of the selected time frame;
• Generating M simulations by simulating M times a plurality of sub-time frames over the entire selected time frame, using a geometric Brownian motion based on the values of the parameter and at least one stochastic term;
• Selecting among the M simulations, a set of K generated simulations wherein the value of the parameter at the end of the time frame minus the target value is lower than a predetermined threshold:
• Obtaining the synthetic data by:
∘ If K is equal to 1, extracting the synthetic data from the selected simulation;
∘ If K is greater than 1 :
▪ Calculating the mathematical average of the M simulations; and
▪ Extracting the synthetic data from the mathematical average of the M simulations.

7. The method (100) according to any of the previous claims wherein the output item comprises historical data, preferably in the form of at least one time series.

8. The method (100) according to any of the previous claims further comprising, when the historical data of the output item is empty:
• a step of identifying a set of J sub-output items, each sub-output item being associated with at least one dependent variable comprising historical data and being related to the output item.
• If J is equal to 1, then:
∘ Setting at least one rolling window period for computing at least one adjusted beta;
∘ Retrieving historical data of the dependent variable at the anchoring date, the historical data comprising a plurality of time series;
∘ Assembling the historical data, preferably the plurality of time series, of the dependent variable;
∘ Retrieving historical and/or scenario data of the independent variable;
∘ Computing, based on a predetermined time window:
▪ A first difference of value between the value of the independent variable before and after the time window; and
▪ A second difference of value between the value of the dependent variable before and after the time window;
∘ Obtaining a mathematical equation of a curve by performing a linear regression of the second difference of values on the first difference of value, for each rolling window over the historical data;
o Extracting at least one slope of the curve using the mathematical equation, the at least one slope corresponding to the raw beta;
oAdjusting the raw beta using the following equation : Adjusted Beta = A * (Raw Beta) + B
∘ For each first difference of value along the historical data:
▪ defining an interval around that value and
▪ filtering the historical data to collect corresponding second difference value and raw beta.
∘ Computing a new beta, preferably using at least one among a statistics mean, median, or quantiles of filtered betas;
o Estimating the log of the second difference of values by multiplying this new beta by the first difference of value.
∘ Converting the estimated log into a predetermined multiplicative factor via an exponential function,
o Updating the dependent variable's value by multiplying its prior value by the predetermined multiplicative factor.
• If J is greater than 1, then:
∘ For each sub-output:
• Selecting at least one independent variable;
▪ For each independent variable:
• obtaining historical data;
• Concatenating the historical data and input items to have a unique time series per independent variable
o Computing the Principal Component Analysis of the independent variables:
▪ Putting all the time series into a matrix
▪ Calculating the co-variance of the matrix
▪ Decomposing the co-variance matrix into its proper vectors
▪ Selecting the proper vector associated with the highest proper value, the proper vector corresponding to a unique time series comprising a linear combination of the time series.

9. The method (100) according to any of the previous claims, further comprising, after the step of selecting at least one output item, a step of selecting at least one target value representing a predetermined future value of at least one of the output items.

10. The method (100) according to any of the previous claims, wherein the selection phase (103) comprises:
• Filtering the simulation to keep only the simulations matching the targets with a predetermined tolerance value at each specified moment; Or
• If no simulation matches the targets with the predetermined tolerance value at each specified moment, measuring a mathematical distance of each simulation to the target profile and picking the simulation having the minimal distance.

11. The method (100) according to any of the previous claims wherein the concatenation step comprises at least one among:
• Calculating a mathematical statistical value of the N selected generated simulations to generate the global generated simulation; or
• Selecting one generated simulation among the N selected generated simulations according to a predetermined set of rules.

12. The method (100) according to the previous claim wherein the predetermined set of rules comprises at least one among:
• Selecting the simulation corresponding to the most positive scenario regarding a set of requirements;
• Selecting the simulation corresponding to the most negative scenario regarding a set of requirements;
• Selecting the simulation corresponding to the set of trends according to a predetermined narrative;
• Selecting a simulation according to a predetermined risk level.

13. A computing system (200) for determining at least one scenario output item regarding the evolution of a predetermined system, the computing system (200) being configured to execute the method (100) according to any of the previous claims, the computing system comprising:
➢ A communication module (240) configured to:
• Receive a selection of a system to evaluate from a first user;
• Receive input items defining a set of trends regarding the selected system; and
• Receive a selection of at least one output item from a second user.
➢ A classical information processing module (210) configured to:
• Determine the relationship between the input items and the output items using a predetermined process;
• Set initial conditions of the system to evaluate according to the input items;
• Post-process streams of random data into a plurality of quantum-generated random numbers;
• Select a set of quantum-generated random numbers;
• Partition the selected set of quantum-generated random numbers into a first predetermined number of subsets, each subset comprising a second predetermined number of quantum-generated random numbers, wherein the first predetermined number is based on a first criterion related to parameters of a simulation step and the second predetermined number is based on a second criterion related to the nature of the system to evaluate;
• Simulate the time evolution of the initial state of the system to evaluate using the set of quantum-generated random numbers to obtain a plurality of final states of the system to evaluate, wherein simulating comprises creating at least one trajectory for each subset of quantum-generated random numbers representing the evolution of the state of the system to evaluate from its initial state to at least one final state over a given timeframe;
• Obtain a distribution of the plurality of final states according to at least one first axis by organizing the plurality of final states based on predetermined rules, said distribution defining a global manifold of n dimensions, n being equal or greater than 1;
• Determine at least one threshold value among the plurality of final states, wherein determining comprises: setting a given criterion, calculating a first manifold of n+1 dimension based on said given criterion under the manifold of n dimension, defining another manifold of n dimension configured to separate the first manifold of n+1 dimension from a second manifold of n+1 dimensions, and computing the at least one threshold value on at least the first axis corresponding to at least one intersection of the first axis with the another manifold of n dimensions;
• Select a set of N generated simulations from the plurality of final states, wherein the selected simulations comprise the set of trends defined by the input items; and
• Determine at least one scenario output item regarding the system to evaluate based on the selected simulations, wherein if N is equal to 1, the scenario output item is extracted from the selected simulation, and if N is greater than 1, the N selected generated simulations are concatenated into a global generated simulation from which the scenario output item is extracted.
➢ A quantum random number generation module (220) coupled with the classical information processing module (210) and configured to:
• Initiate at least one quantum process; and
• Provide a stream of random data generated by the quantum process.
➢ A measurement module (230) coupled with the quantum random number generation module (220) and configured to measure at least one stream of random data from said output of this quantum random number generation module.
➢ A storing module (250) coupled with the classical information processing module (210) and configured to store the quantum-generated random numbers.

14. A computer product program for determining at least one scenario output item regarding the evolution of a predetermined system which, when executed by at least one computing system (200) according to the previous claim, executes the method (100) according to any one of claims 1 to 12.

15. A non-transitory computer readable medium comprising at least one computer program product according to the previous claim.
